Europäisches Patentamt

(19) European Patent Office

Office européen des brevets

(11) Publication number: **0 131 525**
A2

(12) **EUROPEAN PATENT APPLICATION**

(21) Application number: **84420068.3**

(22) Date of filing: **12.04.84**

(51) Int. Cl.⁴: **C 09 K 13/04**
C 23 G 1/02, C 03 C 23/00
H 01 M 10/08

(30) Priority: **04.12.83 US 484201**
**11.07.83 US 549290**

(43) Date of publication of application:
**16.01.85 Bulletin 85/3**

(84) Designated Contracting States:
**AT BE CH DE FR GB IT LI LU NL SE**

(71) Applicant: **CAPETROL INTERNATIONAL, INC.**
**3500 West Robinson St Suite 204**
**Norman Oklahoma 73070(US)**

(72) Inventor: **Garcia, Silverio M.**
**2416 Osborne Drive**
**Norman, Oklahoma 73069(US)**

(74) Representative: **Laurent, Michel et al,**
**20 rue Louis Chirpaz Boite Postale 32**
**F-69130 Lyon-Ecully(FR)**

(54) **Process for producing acidic compositions and acidic compositions obtained.**

(57) Acidic compositions having a pH value of less than about 1 are produced by a process comprising the steps of mixing from about 45 to about 85 weight percent hydrochloric acid with from about 20 to about 55 weight percent phosphoric acid in an acid resistant vessel for an effective period of time to provide a substantially homogeneous acidic mixture; admixing the homogeneous acidic mixture into an effective amount of water to provide an aqueous acidic mixture; and admixing from about 2 to about 20 weight percent of a hydroxy carboxylic acid and from about 0 to about 20 weight percent of a hydroxy carboxylic acid and from about 0 to about 20 weight percent of a dicarboxylic acid into the aqueous acidic mixture to produce aqueous acidic compositions having pH values of less than about 1. The aqueous acidic compositions so produced can then be admixed with various constituents, such as polyamines, inorganic acids or organic acids, to provide modified aqueous acidic compositions.

PROCESS FOR PRODUCING ACIDIC COMPOSITIONS AND ACIDIC
COMPOSITIONS OBTAINED.

### Field of the Invention

The present invention relates to acidic compositions, and more particularly but not by way of limitation, to aqueous acidic compositions having pH values of
less than about 1. In one aspect, the present invention
relates to aqueous acidic compositions containing from
about 70 to about 90 weight percent water and having pH
values of less than about 1 which, when admixed with
various constituents, such as polyamines, inorganic acids
and organic acids, provide modified aqueous acidic compositions having unique properties. In another aspect the
present invention relates to a method for producing the
aqueous acidic compositions and the modified aqueous
acidic compositions.

### Discussion of Prior Art

Acidic compositions, such as inorganic acids, organic acids and mixtures of such acids have heretofore been known and used widely. In such uses it is generally desirable that the acidic compositions have a sufficiently low pH value or degree of acidity in order to allow the acid components to be active and achieve the objects for which they are intended. The term pH value is generally employed as a means for expressing the degree of acidity or basicity of a solution. For example, at normal temperature a neutral solution, such as pure distilled water, has a pH of about 7; whereas a one-tenth normal solution of hydrochloric acid (approximately 3.65 grams hydrochloric acid per liter of water) has a pH near 1 and is considered to be strongly acidic. When employing the strongly acidic compositions heretofore known, such as acidic solutions containing pH values of approximately 1 or less, problems have been encountered because of the inherent dangers which may be encountered by the user of such acidic compositions, as well as the deleterious nature of the acidic compositions when contacted with metal and or other surfaces. Because of the wide spread use of acidic compositions, both in the chemical industry as an intermediate or reactant and in commerce as a component of an end use product, new and improved acidic compositions having strongly acidic properties (i.e. low pH values) are desired, especially if such acidic compositions can be rendered substantially inert until such time as it is desirable to selectively activate the acidic compositions. In other words, it would be highly desirable to provide an acidic composition which could be handled without fear of physical harm to the user, and which would exhibit desired acidic functions when brought into contact with selected surfaces or compositions.

## Summary of the Invention

The present invention provides improved acidic compositions having pH values of less than about 1 and a method for producing such acidic compositions. The acidic compositions of the present invention are substantially inert and inactive until contacted with a surface or substance on which activity of the acidic compositions is desired. The acidic compositions having the unique activity characteristics are aqueous acidic compositions containing from about 70 to about 90 weight percent water and having pH values of less than about 1. The aqueous acidic compositions are produced by a method comprising the steps of:

(a) mixing from about 45 to about 80 weight percent hydrochloric acid with from about 20 to about 55 weight percent phosphoric acid in a suitable vessel for an effective period of time to provide a substantially homogeneous acidic mixture;

(b) admixing the homogeneous acidic mixture into an effective amount of water to provide an aqueous acidic mixture; and

(c) admixing from about 2 to about 20 weight percent of a hydroxy carboxylic acid and from about 0 to about 20 weight percent of a dicarboxylic acid into the aqueous acidic mixture to produce an aqueous acidic compositions having a pH value of less than about 1 and containing from about 70 to about 90 weight percent water.

The aqueous acidic compositions prepared in accordance with the process set forth above, upon admixture with a polyamine and/or additional acid constituents, such as inorganic acids and organic acids, provide resulting acidic compositions having pH values of less than about 1 which possess the substantially inert characteristics of the aqueous acidic compositions.

An object of the present invention is to provide an improved, substantially non-toxic composition having strong acidic properties which can be used and handled without substantial damage or risk of injury to the user.

Another object of the present invention, while achieving the above stated object, is to provide a composition having strong acidic properties which is substantially inert until selectively activated during use.

Yet another object of the present invention, while achieving the above stated objects, is to provide an improved composition having strong acidic properties which upon use and activation does not have deleterious effects on metals, glass and the like.

Other objects, advantages and features of the present invention will be apparent from the following detailed description when read in conjunction with the appended claims.

## Description of Preferred Embodiments

The present invention provides acidic compositions having pH values of less than 1 which are formed from selected conventional inorganic and organic acids. The acidic compositions of the present invention possess unique properties in that such compositions have strong acidic properties (i.e. pH values of less than about 1), and yet are substantially inert until activated, such as by application of the acidic compositions to selected surfaces which contain ions capable of activating acidic properties of the acidic compositions.

The exact structure and function of the acidic compositions of the present invention is not known. However, one theory is that during the mixing of the acidic constituents employed in the manufacture of the acidic compositions of the present invention, a high concentration of hydrogen ions (H+) are released into and remain present in the aqueous solution of the acidic compositions. Thus, when the aqueous acidic compositions are mixed with additional acid constituents, the high concentration of hydrogen ions present in the aqueous acidic compositions prohibits the release of hydrogen ions from the acid molecules of the additional acid constituents and the aqueous acidic compositions. Because the acid molecules cannot release their hydrogen ions, the total composition (i.e. the mixture of the aqueous composition and the additional acid constituents) remains inactive until the composition comes into contact with an active surface (i.e. a surface that can accept large quantities of hydrogen atoms). Upon contact with the active surface the acid molecules present in the composition becomes active as long as the composition remains in contact with the active surface, and as long as the surface contains substances to exchange with the hydrogen ions present in the aqueous acidic compositions. When the surface has been cleaved of its active substances the surface becomes passivated so that the exchange of the hydrogen ions discontinues and the surface is again inactivated and the aqueous acidic compositions become substantially inert.

The unique acidic compositions of the present invention are prepared by a process wherein ingredients are critical. The order of addition of the ingredients used in the formulation of the acidic compositions can be varied without substantially altering the properties of the acidic compositions. However, especially desirable results have been obtained when the acidic compositions are prepared in accordance with the following procedure.

The initial step in the preparation of the acidic compositions of the present invention comprises admixing from about 45 to about 80 weight percent hydrochloric acid and from about 20 to about 55 weight percent phosphoric acid in a vessel for an effective period of time to provide a substantially homogeneous acidic mixture. Because strong fumes are emitted upon mixing the hydrochloric acid and the phosphoric acid, care should be exercised in the mixing of the two components to insure that the mixing step is carried out in a well ventilated area or hood. The time required to mix the hydrochloric acid and phosphoric acid so as to provide a substantially homogeneous acidic mixture can vary widely; and the mixing time or period will generally depend upon the rate of addition of the two components, amounts of the two components, the rate or speed of agitation and the like.

All mixing and storage containers employed in the production of the acidic compositions are desirably fabricated of a substance that is acid resistant, such as stainless steel, plastic, fiberglass, glass, and the like. It is also desirable that all containers used in the process of the present invention be provided with covers for safety reasons and to keep foreign materials out of the product, especially the container in which the hydrochloric acid and phosphoric acid are mixed.

The homogeneous acidic mixture formed from the hydrochloric acid and phosphoric acid is then admixed with an effective amount of water to provide an aqueous acidic mixture. The amount of water employed in the formulation of the aqueous acidic mixture can vary widely but is generally an amount sufficient to provide from about 70 to about 90 weight percent water in the aqueous acidic mixture. The aqueous acidic mixture is thoroughly stirred to insure substantially complete dispersion of the homogeneous acid mixture of the hydrochloric acid and the phosphoric acid into the water and to provide a substantially uniform aqueous acidic mixture.

While maintaining agitation on the aqueous acidic mixture, from about 2 to about 20 weight percent of a hydroxy carboxylic acid and from 0 to about 20 weight percent of a dicarboxylic acid are admixed with the aqueous acidic mixture to produce the aqueous acidic compositions of the present invention having a pH value of less than about 1.

As indicated above, the hydroxy carboxylic acid is a critical ingredient in the formation of the aqueous acidic compositions; whereas the dicarboxylic acid is an optional ingredient. However, especially desirable results have been obtained when producing an aqueous acidic composition containing the dicarboxylic acid. The amount of hydroxy carboxylic acid and dicarboxylic acid incorporated into the aqueous acid mixture of the hydrochloric acid and phosphoric acid can vary widely within the ranges set forth hereinabove. However, the optimum amounts of hydroxy carboxylic acid and dicarboxylic acid admixed with the aqueous acidic mixture are the amounts required to provide from about 2 to about 10 weight percent of the hydroxy carboxylic acid and from about 1 to about 10 weight percent of the dicarboxylic acid in the aqueous acidic composition.

When the dicarboxylic acid is included in the formulation of the acidic composition, the dicarboxylic acid is generally admixed into the aqueous acidic mixture along with the hydroxy carboxylic acid. The order of addition of the dicarboxylic acid and the hydroxy carboxylic acid is not critical, although desirable results have been obtained wherein the dicarboxylic acid is introduced into the aqueous acidic mixture after the addition of the hydroxy carboxylic acid.

Any suitable hydroxy carboxylic acid can be employed in the preparation of the aqueous acidic compositions of the present invention. Typical of such hydroxy carboxylic acids are citric acid, tartaric acid, malic acid, and the like. However, especially desirable results have been obtained wherein the hydroxy carboxylic acid added to the aqueous acidic mixture is citric acid.

Any suitable dicarboxylic acid can be employed in the preparation of the aqeuous acidic compositions of the present invention. Typical of such dicarboxylic acids are oxalic acid, malonic acid, succinic acid, glutaric acid, adipic acid, and the like. However, when employing a dicarboxylic acid in the preparation of the aqueous acidic compositions of the present invention, desirable results have been obtained when the dicarboxylic acid added to the aqueous acidic mixture is oxalic acid.

The aqueous acidic compositions so produced will desirably contain from about 70 to about 90 weight percent water, more desirably from about 75 to 80 percent water. Thus, depending upon the amount of hydroxy carboxylic acid and dicarboxylic acid added to the aqueous acidic mixture, as well as the amount of water initially added to the acidic mixture formed by the hydrochloric acid and the phosphoric acid, it may be desirable to further dilute the aqueous acidic compositions with an effective amount of water to insure that the concentration of water in the aqueous acidic composition is from about 70 to about 90 weight percent, more desirably from about 75 to about 80 weight percent. In those instances where it is determined that the amount of water present in the aqueous acidic composition is less than the specified amount, the aqueous acidic composition is admixed with an effective amount of water so as to provide the aqueous acidic composition with the desired amount of water specified above.

The aqueous acidic compositions prepared by the process described above are substantially colorless liquids having an appearance substantially similar to water. Further, the aqueous acidic compositions prepared above, both with and without the incorporation of a dicarboxylic acid, such as oxalic acid, can be employed to clean oxides from metallic surfaces such as steel and aluminum, without causing any substantial damage to the metal.

The aqueous acidic composition as described above and containing from about 70 to about 90 weight percent water can be admixed with an effective amount of additional acid constituents to provide resulting aqueous acidic products for use in batteries, as a glass cleaning agent, as an oxide remover from metal surfaces such as steel and aluminum, as a deposit or scale remover in a water treatment system and the like. The additional acid constituents which can be admixed into the aqueous acidic composition can be any suitable acid, including inorganic and organic acids. The concentration of the additional acid constituents admixed into the aqueous acidic composition can vary widely and will generally depend on the particular acidic constituent added and the use for which the resulting aqueous acidic composition is intended. Generally, however, the amount of additional acid constituents admixed with the aqueous acidic composition will be an amount effective to provide from about 1 to about 65 weight percent of the additional acidic constituent in the resulting acidic composition. For example, when hydrochloric acid is employed as the additional acid constituent incorporated into the aqueous acidic composition to produce the resulting aqueous acidic composition, the amount of hydrochloric acid employed can vary between from about 1 to about 65 weight percent. On the other hand, when the additional acid constituent is an inorganic acid selected from the group consisting of sulfuric acid, nitric acid, and aqua regia, desirable results can be achieved when the amount of the inorganic acid admixed with the aqueous acidic composition to form the resulting aqueous acidic composition is an amount sufficient to provide up to about 50 weight percent of the inorganic acid constituent in the resulting aqueous acid composition. When hydrofluoric acid is employed as the additional acid constituent the amount of hydrofluoric acid admixed with the aqueous acidic composition will generally be an amount sufficient to provide a resulting aqueous acidic composition containing up to about 45 weight percent, and more desirably less than about 10 weight percent of the hydrofluoric acid constituent when the resulting aqueous acidic composition is to be employed as glass cleaning composition.

As previously stated, the additional acid constituent added to the aqueous acidic composition can also be an organic acid constituent. The only requirement in the selection of an organic acid constituent is that the organic acid constituent must be soluble in the aqueous acidic composition. Typical organic acid constituents which can be employed to produce the resulting aqueous acid compositions of the present invention are acetic acid, lauric acid, oleic acid, citric acid, and the like.

The aqueous acidic composition containing from about 70 to about 90 percent water and having a pH value of less than about 1 can also be modified by admixing a minor effective amount of a polyamine constituent into the aqueous acidic composition to produce amine modified aqueous acidic composition having a pH value of less than about 1. The minor effective amount of the polyamine incorporated into the aqueous acidic composition can vary widely, but will generally range from about 1 to about 5 weight percent. Any suitable polyamine compatible with the aqueous acidic composition can be employed. Typical of such polyamines are hexamethylenetetramine, hexamethylenediamine, hexamethyleneimine, and the like. Desirable results have been obtained where the polyamine is hexamethylenetetramine, and the hexamethylenetetramine is incorporated into the aqueous acidic composition in an amount from about 2 to about 3 weight percent.

As previously stated, the water content of the aqueous acidic composition of the present invention is desirably from about 70 to about 90 weight percent, and more desirably from about 75 to about 80 weight percent. Thus, when a polyamine such as hexamethylenetetramine is employed to modify the aqueous acidic composition, it may be desirable to further dilute the aqueous acidic composition with an effective amount of water such that upon addition of the polyamine the amine modified aqueous acidic composition contains the desired amount of water.

The amine modified aqueous acidic composition described above can thereafter be mixed with an effective amount of an inorganic acid to provide resulting amine modified acidic compositions containing at least about 20 weight percent of the amine modified aqueous acidic composition and up to about 80 weight percent of the inorganic acid constituent. Any suitable inorganic acid can be mixed with the amine modified aqueous acidic composition to provide the resulting amine modified acidic composition, such as hydrochloric acid, hydrofluoric acid, and mixtures thereof. For example, the inorganic acid incorporated into the amine modified aqueous acidic compositions can be a mixture of inorganic acids containing from about 1 to about 50 weight percent hydrofluoric acid and from about 50 to about 99 weight percent hydrochloric acid, desirably from about 1 to about 10 weight percent hydrofluoric and from about 90 to about 99 weight percent hydrochloric acid.

The aqueous acidic composition and the amine modified aqueous acidic composition possess unique properties in that when strong inorganic acids (i.e. hydrochloric acid, sulfuric acid, hydrofluoric acid, phosphoric acid and the like) are mixed with the aqueous acid composition or the amine modified aqueous acid composition, the aqueous acidic composition and amine modified aqueous acidic composition impart the substantial inert characteristics of the aqueous acidic composition and the amine modified aqueous acidic composition to the resulting compositions. Thus, the resulting compositions remain in a substantially inactive or inert state except when the resulting compositions are contacted with a substance having the desired properties to activate the resulting compositions.

The resulting acid compositions formed by admixing the aqueous acidic composition with the before-mentioned amount of a polyamine and/or the additional acidic components are new and useful products having a large variety of uses. For example, when incorporating 25 weight percent hydrochloric acid into the amine modified aqueous acidic composition a composition is formulated which can be used for acidizing formations in the production of hydrocarbons. Further, upon incorporating about 40 weight percent sulfuric acid into the amine modified aqueous acidic composition a battery acid composition is formulated which upon injection into the cells of the battery restores the useful life of the battery without the need of an external charge.

In order to more fully describe the present invention, the following example is set forth. However, it is to be understood that the examples are for illustrative purposes and are not to be construed as limiting the scope of the present invention as defined in the appended claims.

## EXAMPLE I

### Preparation of Aqueous Acidic Composition

32.57 kg of hydrochloric acid and 18.82 kg of phosphoric acid were added to a container and the acids were stirred to produce a substantially homogeneous acidic mixture. During the mixing of the hydrochloric acid and the phosphoric acid fumes were generated. Thus, the mixing of the hydrochloric acid and the phosphoric acid was carried out in a ventilated area.

150.6 kg of clean water was then placed into a second container. 51.20 kg of the hydrochloric-phosphoric acid mixture was added to the water in the second container. The resulting aqueous acidic solution was mixed thoroughly. Thereafter, 9.78 kg of powdered citric acid and 6.77 kg of powdered oxalic acid were admixed into the aqueous acidic mixture to produce an aqueous acidic composition.

The aqueous acidic composition was then diluted by admixing 218.36 kg of the aqueous acidic composition with 150.6 kg of clean water in a third container. The aqueous acidic composition and water were thoroughly stirred and provided 440 litres (369 kg) of an aqueous acidic composition having a pH value of about 0.49.

It should be noted that the mixing and storage containers employed were fiberglass containers which were substantially acid resistant. Further, all containers were covered for safety reasons and to prevent foreign materials from being injected into the aqueous acidic composition.

## EXAMPLE II

### Preparation of Amine Modified Aqueous Acidic Composition

In the preparation of an amine modified aqueous acidic composition the same steps and procedures set forth in Example I for the preparation of the aqueous acidic composition were carried out. Following the dilution of the aqueous acidic composition described above, 7.52 kg of hexamethylenetetramine was admixed into 396 kg of the aqueous acidic composition and mixing continued until a substantially homogeneous colorless liquid was formed. 454.6 litres (376.5 kg) of an amine modified aqueous acidic composition was formed using the procedure, and the amine modified aqueous acidic compositions had a pH value of about 0.91.

As in the preparation of the aqueous acidic composition of Example I, all the mixing and storage containers employed were fiberglass containers. Further, each of the containers was covered for safety reasons and to

- 17 -                    0131525

prevent foreign materials from being introduced into the product.

## EXAMPLE III

A portion of the aqueous acidic composition prepared in Example I was mixed with an effective amount of hydrofluoric acid such that the resulting aqueous acidic composition contained about 5 weight percent hydrofluoric acid. The resulting aqueous acidic composition (a substantially clear, colorless liquid) was applied to a glass surface as a cleaning agent. Substantially all of the grime was removed from the glass using the resulting aqueous acidic composition and no etching of the glass was detected.

## EXAMPLE IV

A portion of the aqueous acidic composition prepared in Example I was applied to a rust coated bolt. The composition effectively removed the rust from the bolt and did not appear to attack the rust free surface of the bolt.

## EXAMPLE V

A portion of the amine modified aqueous acidic composition prepared in Example II was admixed with an effective amount of hydrochloric acid to provide a resulting amine modified aqueous composition having a concentration of about 80 weight percent hydrochloric acid.

The resulting amine modified aqueous composition was then injected into a radiator containing large deposits of rust and scale. The resulting amine modified aqueous composition readily removed substantially all of the rust and scale from the radiator, and upon visual inspection of the cleaned radiator no corrosion or damage to the metal of the radiator was detected.


EXAMPLE VI

A portion of the aqueous acidic composition prepared in Example I was mixed with an effective amount of sulfuric acid to provide a resulting aqueous acidic composition containing about 40 weight percent sulfuric acid. A portion of the battery acid in an automobile battery which did not have enough power to crank the motor of an automobile was replaced with the resulting aqueous acidic composition. After the addition of the resulting aqueous acidic composition to the battery the battery contained a sufficient charge to crank the motor of the automobile.

The aqueous acidic compositions of the present invention, including the amine modified aqueous acidic compositions exhibit very strong acid properties, and yet are substantially inert except when applied to an active surface. Thus, the new compositions of the present invention provide a new array of chemical compositions having special properties which can readily be modified by the incorporation of selected quantities of acid constituents, such as inorganic acids and organic acids.

Further, the acidic compositions of the present invention appear to act as a "buffer" since the products do not react in any form with additional acidic components, both inorganic and organic, to change their chemical properties except to render such additional acids substantially inert until such times as the resulting composition is brought into contact with an active surface.

It is clear that the present invention is well adapted to carry out the objects and attain the ends and advantages mentioned herein as well as those inherent in the invention. While presently preferred embodiments of the invention have been described for purposes of this disclosure, numerous changes may be made which will readily suggest themselves to those skilled in the art and which are accomplished within the spirit of the invention disclosed and as defined in the appended claims.

CLAIMS

1/ A process for producing an acidic composition characterized by the fact that it comprises the steps of :

- mixing from about 45 to about 80 weight percent hydrochloric acid with from about 20 to about 55 weight percent phosphoric acid to produce an acidic mixture ;

- admixing the acidic mixture with an effective amount of water to produce an aqueous acidic mixture ;

- and admixing an effective minor amount of a hydroxy carboxylic acid with the aqueous acidic mixture to produce an aqueous acidic composition having a pH value of less than about 1.

2/ The process of claim 1 wherein the aqueous acidic composition contains from about 70 to about 90 weight percent water.

3/ The process of claim 1 wherein the effective minor amount of the hydroxy carboxylic acid admixed with the aqueous acidic mixture is from about 2 to about 20 weight percent.

4/ The process of claim 1 wherein the carboxylic acid is selected from the group consisting of citric acid, oxalic acid and oleic acid.

5/ The process of claim 1, further comprising :

- admixing up to about 20 weight percent of a dicarboxylic acid with the aqueous acidic mixture ;

- wherein the amount of dicarboxylic acid admixed with the aqueous acidic mixture is from about 1 to about 10 weight percent.

6/ The process of claim 5, further comprising :

- diluting the aqueous acidic composition with an effective amount of water to provide the aqueous acidic composition with from about 70 to about
90 weight percent water ;
- and admixing from about 1 to about 65 weight
percent of an inorganic acid with the aqueous
acidic composition to produce an acid modified
aqueous acidic composition.

7/ The process of claim 6 wherein the inorganic
acid is selected from the group consisting of sulfuric
acid, nitric acid an aqua regia, and wherein the inorganic acid is admixed with the aqueous acidic composition
in an amount of up to about 50 weight percent.

8/ The acidic composition prepared by the process
of claim 6 wherein the inorganic acid is hydrofluoric
acid, and the hydrofluoric acid is admixed with the
aqueous acidic composition in an amount up to about 45
weight percent.

9/ The acid composition prepared by the process of
claim 6 wherein the inorganic acid is hydrochloric acid.

10/ An amine modified acidic composition prepared
by the process according to any claims 1 to 9 comprising
the steps of :
- mixing from about 45 to about 80 weight percent
hydrochloric acid with from about 20 to about
55 weight percent phosphoric acid to produce a
substantially homogeneous acidic mixture ;
- admixing the acidic mixture with an effective
amount of water to provide an aqueous acidic
mixture ;
- admixing from about 2 to about 20 weight percent
of a hydroxy carboxylic acid with the aqueous
acidic mixture to produce a hydroxy carboxylic
acid containing aqueous acidic mixture ; 
- and admixing a minor effective amount of a polyamine constituent with the hydroxy carboxylic acid
containing aqueous acidic mixture to provide a stable, amine modified aqueous acidic composition having a pH value of less than about 1.

11/ The amine modified acidic composition prepared by the process of claim 10 wherein the minor effective amount of the polyamine incorporated into the hydroxy carboxylic acid containing aqueous acidic mixture is from about 1 to about 5 weight percent.

12/ The amine modified acidic composition prepared by the process of claim 10 wherein the polyamine is hexamethylenetetramine.

13/ The amine modified acidic composition prepared by the process of claim 12 wherein the hexamethylene-tetramine is incorporated into the hydroxy carboxylic acid containing aqueous acidic mixture in an amount of from about 2 to about 3 weight percent.

14/ The amine modified acidic composition prepared by the process of claim 10, the process further comprising :

- admixing an effective amount of an inorganic acid with the amine modified aqueous acidic composition to provide a resulting acidic composition containing at least about 20 weight percent of the amine modified aqueous acidic composition and up to about 80 weight percent of the inorganic acid.

15/ The amine modified acidic composition prepared by the process of claim 14 wherein the inorganic acid is selected from the group consisting of hydrochloric acid, hydrofluoric acid and mixtures thereof.

16/ The amine acidic composition prepared by the process of claim 15 wherein the inorganic acid is a mixture containing from about 1 to about 50 weight percent hydrofluoric acid and from about 50 to about 99 weight percent hydrochloric acid.

17/ A process for preparing acidic composition

- 23 -

having pH values of less than about 1 according to claim 1 comprising the steps of :

- mixing from about 45 to about 80 weight percent hydrochloric acid with from about 20 to about 55 weight percent phosphoric acid in an acid resistant vessel for an effective period of time to provide a substantially homogeneous acidic mixture ;

- admixing the homogeneous acidic mixture with an effective amount of water to provide an aqueous acidic mixture ;

- and admixing from about 2 to about 20 weight. percent of a hydroxy carboxylic acid and from about 0 to about 20 weight percent of a dicarboxylic acid with the aqueous acidic mixture.

18/ Acidic compositions characterized by the fact that they are obtained by the process according to any of the claims 1-9 and 17.

## CLAIMS

1/ A process for producing an acidic composition characterized by the fact that it comprises the steps of :

- mixing from about 45 to about 80 weight percent hydrochloric acid with from about 20 to about 55 weight percent phosphoric acid to produce an acidic mixture ;
- admixing the acidic mixture with an effective amount of water to produce an aqueous acidic mixture ;
- and admixing an effective minor amount of a hydroxy carboxylic acid with the aqueous acidic mixture to produce an aqueous acidic composition having a pH value of less than about 1.

2/ The process of claim 1 wherein the aqueous acidic composition contains from about 70 to about 90 weight percent water.

3/ The process of claim 1 wherein the effective minor amount of the hydroxy carboxylic acid admixed with the aqueous acidic mixture is from about 2 to about 20 weight percent.

4/ The process of claim 1 wherein the carboxylic acid is selected from the group consisting of citric acid, oxalic acid and oleic acid.

5/ The process of claim 1, further comprising :

- admixing up to about 20 weight percent of a dicarboxylic acid with the aqueous acidic mixture ;
- wherein the amount of dicarboxylic acid admixed with the aqueous acidic mixture is from about 1 to about 10 weight percent.

6/ The process of claim 5, further comprising :

- diluting the aqueous acidic composition with an effective amount of water to provide the aqueous acidic composition with from about 70 to about 90 weight percent water ;

- and admixing from about 1 to about 65 weight percent of an inorganic acid with the aqueous acidic composition to produce an acid modified aqueous acidic composition.

7/ The process of claim 6 wherein the inorganic acid is selected from the group consisting of sulfuric acid, nitric acid an aqua regia, and wherein the inorganic acid is admixed with the aqueous acidic composition in an amount of up to about 50 weight percent.

8/ A process for preparing acidic composition having pH values of less thant about 1 according to claim 1 comprising the steps of :

- mixing from about 45 to about 80 weight percent hydrochloric acid with from about 20 to about 55 weight percent phosphoric acid in an acid resistant vessel fro an effective period of time to provide a susbstantially homogeneous acidic mixture ;

- admixing the homogeneous acidic mixture with an effective amount of water to provide an aqueous acidic mixture ;

- and admixing from about 2 to about 20 weight percent of a hydroxy carboxylic acid and from about 0 to about 20 weight percent of a dicarboxylic acid with the aqueous acidic mixture.